# EUROPÄISCHE PATENTSCHRIFT

(11) **EP 3 844 834 B1**
(45) Veröffentlichungstag und Bekanntmachung des Hinweises auf die Patenterteilung: **15.11.2023**
(21) Anmeldenummer: 19772986.6
(22) Anmeldetag: 28.08.2019
(51) Int. Cl.: H01M 8/04089, H01M 8/0662, B64D 41/00, B64D 37/32, A62C 3/06, A62C 3/08, A62C 99/00

(54) **VERFAHREN ZUR STEIGERUNG DER KALTSTARTFÄHIGKEIT SOWIE DES LASTAUFSCHALT- UND LEISTUNGSVERMÖGENS VON BRENNSTOFFZELLEN BEI GLEICHZEITIGER SAUERSTOFFABREICHERUNG DES SYSTEMABGASES**
METHOD FOR INCREASING THE COLD START CAPABILITY AND THE LOAD APPLICATION CAPABILITY AND POWER CAPACITY OF FUEL CELLS WHILE SIMULTANEOUSLY OXYGEN-DEPLETING THE SYSTEM EXHAUST GAS
PROCÉDÉ POUR AUGMENTER LA CAPACITÉ DE DÉMARRAGE A FROID ET LA CAPACITÉ DE COMMUTATION DE CHARGE ET DE PERFORMANCE DE PILES A COMBUSTIBLE AVEC RÉDUCTION SIMULTANÉ EN OXYGÉNÉ DES GAZ D'ÉCHAPPEMENT DU SYSTÈME

(30) Priorität: 31.08.2018 DE 102018121371
(43) Veröffentlichungstag der Anmeldung: 07.07.2021
(73) Patentinhaber: Deutsches Zentrum für Luft- und Raumfahrt e.V., 51147 Köln (DE)
(72) Erfinder: BECKER, Florian, 22083 Hamburg (DE); MONTANER RIOS, Gema, 22765 Hamburg (DE); SCHIRMER, Johannes, 71549 Auenwald (DE)
(74) Vertreter: VKK Patentanwälte PartG mbB
(86) Internationale Anmeldenummer: PCT/EP2019/072958
(87) Internationale Veröffentlichungsnummer: WO 2020/043774

(56) Entgegenhaltungen:
- DE-A1-102005 054 888
- US-A1- 2004 043 276
- US-A1- 2015 017 557

## Beschreibung

Die vorliegende Erfindung betrifft ein Verfahren zur Steigerung der Kaltstartfähigkeit sowie des Lastaufschalt- und Leistungsvermögens von Brennstoffzellen bei gleichzeitiger Sauerstoffabreicherung des Systemabgases.

In der Flugzeugtechnik hat es sich insbesondere in sicherheitstechnischer Hinsicht etabliert, Inertisierungssysteme wie beispielsweise das OBIGGS (On-Board Inert Gas Generator System) zu verwenden. Ziel dieser Inertisierungssysteme ist es, inertes, also nicht-reaktives Gas zu erzeugen, um ungewollte Reaktionen und daraus resultierende Schäden an der Maschine und deren Insassen zu vermeiden. Derartige Inertisierungssysteme bestehen dabei stets mindestens aus einem Gasseparator, wie beispielsweise einer Membran, die eine Zuluft, welche durch die Umgebungsluft gebildet sein kann, in ein sauerstoffangereichertes Gas und ein stickstoffangereichertes Gas, teilt. Im Fall der Membran werden die unterschiedlichen Diffusionsgeschwindigkeiten von Stickstoff, Sauerstoff und Wasser genutzt, sodass Stickstoff aufgrund der geringen Diffusionsgeschwindigkeit deutlich länger als Sauerstoff und Wasser braucht, um die Membran zu durchdringen. Das auch als Inertgas bezeichnete, stickstoffangereicherte Gas wird dann vor allem in die Tanks der Flugzeuge gepumpt, sodass die hochentzündliche Tankfüllung vor folgenschweren Reaktionen mit Sauerstoff deutlich besser geschützt ist.

In der Brennstoffzellentechnik ist bekannt, dass eingeführter Sauerstoff zu einer deutlichen Leistungssteigerung der Brennstoffzellen führt. Wird Sauerstoff als Kathodenzuluft verwendet, sinkt der erforderliche Gesamtvolumenstrom der Kathodenzuluft, da in der Brennstoffzelle lediglich Sauerstoff umgesetzt wird. Durch die Verringerung des erforderlichen Gesamtvolumenstroms ist weiterhin das Kathodengas weniger stark zu verdichten, sodass Leistung eingespart werden kann. Weiter muss aufgrund des reduzierten Gasvolumenstroms von dem Kathodengas mehr Produktwasser je Zeiteinheit aufgenommen werden, wodurch der Wasserdampfpartialdruck in der Kathode steigt. Dies steigert ebenfalls die Leistung der Brennstoffzelle, erfordert aber auch eine abweichende Betriebstemperatur der gesamten Brennstoffzelle.

So ist aus der US 2015 / 0 068 630 A1 ein System bekannt, bei dem eine Brennstoffzelle an einen Sauerstoffgenerator (OBOGS - On Board Oxygen Generation System) angeschlossen ist und von diesem mit Sauerstoff versorgt wird, sodass ein höheres Leistungsvermögen der Brennstoffzelle erreicht wird.

Aus der WO 2015 148 250 A1 ist weiter ein System bekannt, bei dem das Kathodenabgas rückgeführt wird und vor dem Rückeinführen in die Kathode der Brennstoffzelle mit einem Sauerstoff-Inertgas-Gemisch zusammengeführt wird. Auch hier wird der Brennstoffzelle bewusst ein hoher Anteil an Sauerstoff zugeführt, um ein hohes Leistungsvermögen zu erreichen.

Aus den Dokumenten US 2015/017557 A1 und US 2004/043276 A1 sind Verfahren zum Betreiben einer Niedrigtemperatur-Brennstoffzelle in einem Fahrzeug bekannt. Das Dokument DE 10 2005 054 888 A1 lehrt ein System mit einer Sauerstoffanreicherungsvorrichtung und einem Brennstoffzellensystem zur Verwendung in einem Fahrzeug.

Es sind weiter Anwendungen bekannt, bei denen sauerstoffarme Abgase von Brennstoffzellen zur Rauminertisierung, beispielsweise von Serverräumen verwendet werden.

Der Erfindung liegt daher die Aufgabe zu Grunde, ein besonders effizientes Gasmanagement bereitzustellen.

Die Aufgabe wird gelöst durch ein Verfahren mit den Merkmalen des Anspruchs 1.

Bei einem Verfahren zur Steigerung der Kaltstartfähigkeit sowie des Lastaufschalt- und Leistungsvermögens von Flugzeugen bei gleichzeitiger Sauerstoffabreicherung des Systemabgases wird eine Zuluft in einem Verdichter eines Inertisierungssystems verdichtet und in einen Gasseparator des Inertisierungssystems geführt, aus dem ein sauerstoffangereichertes Gas und ein stickstoffangereichertes Gas abgeführt werden, wobei weiter aus einer Brennstoffzelle ein Kathodenabgas abgeführt und durch einen Kondensator verflüssigt wird, wobei aus dem verflüssigten Kathodenabgas Wasser durch einen Wasserabscheider getrennt wird, und wobei das sauerstoffangereicherte Gas durch einen Kathodeneingang einer Brennstoffzelle in die Brennstoffzelle geführt wird.

Die Zuluft wird zunächst in einem Verdichter verdichtet, sodass ein erhöhter Volumenstrom erzielt wird. So kann die verdichtete Zuluft durch den stromabwärts vom Verdichter angeordneten Gasseparator, welcher beispielsweise als Membran ausgebildet sein kann, deutlich effizienter in ein sauerstoffangereichertes Gas und ein stickstoffangereichertes Gas getrennt werden. Das stickstoffangereicherte Gas wird dann erfindungsgemäß als Inertgas verwendet, welches in Flugzeugen wie im Stand der Technik üblich in Treibstofftanks gepumpt werden oder andere Funktionen erfüllen kann. Das sauerstoffangereicherte Gas wird erfindungsgemäß durch einen Kathodeneingang in die an einen Ausgang des Gasseparators angeschlossene, mindestens eine Brennstoffzelle geführt. So sind mit Vorteil weder ein separater Sauerstoffgenerator noch ein Sauerstofftank notwendig, um das Leistungsvermögen der Brennstoffzelle zu optimieren. Durch die Nutzung des sauerstoffangereicherten Gases als Kathodengas wird vorteilhaft die Kaltstartfähigkeit der Brennstoffzelle verbessert, da die Brennstoffzelle selbst durch die Zuführung von sauerstoffangereichertem Gas deutlich schneller mit der Umsetzung des Sauerstoffes aufgrund der hohen Sauerstoffkonzentration beginnen kann. Vorlaufzeiten von eventuellen Vorverdichtern sind reduziert. Weitere Vorverdichter können insbesondere dann eingesetzt werden, wenn der Volumenstrom des sauerstoffangereicherten Gases aus dem Gasseparator nicht ausreicht, um die erforderliche Leistung der Brennstoffzelle zu erreichen. So kann einem ebenfalls am Kathodeneingang der Brennstoffzelle angeschlossenen Vorverdichter weitere unbearbeitete Zuluft zugeführt werden, welche der Brennstoffzelle gemeinsam mit der sauerstoffangereicherten Luft aus dem Gasseparator des Inertisierungssystems zugeführt wird. Dabei ist es erfindungsgemäß, dass die erforderliche Leistung zur Bereitstellung des Kathodengases unabhängig von der Verwendung eines Vorverdichters stets geringer ist als die zum jeweiligen, separaten Betrieb erforderliche Leistung für Brennstoffzelle und Inertisierungssystem. Das Kathodenabgas der Brennstoffzelle wird dabei vorzugsweise durch einen Kondensator verflüssigt und in einem Wasserabscheider von Wasser getrennt. Das von Wasser gereinigte Kathodenabgas wird anschließend als Abgas aus dem System ausgestoßen.

Erfindungsgemäß ist vorgesehen, dass ein Sauerstoff- und Wasserdampfpartialdruck im sauerstoffangereicherten Gas und die Menge des bereitgestellten Inertgases iterativ an die jeweiligen, zum benötigten Leistungsvermögen der Brennstoffzelle korrespondierenden Werte angepasst werden. So kann je nach Bedarf erfindungsgemäß insbesondere der Stoffmengenanteil des Sauerstoffs im Kathodenabgas angepasst werden, indem ein der Brennstoffzelle vorgeschalteter Gasseparator so angesteuert wird, dass ein der Brennstoffzelle zugeführtes Gas einen entsprechend angepassten Sauerstoffanteil hat, oder im Falle einer Rezirkulation des Kathodenabgases ein der Brennstoffzelle nachgeschalteter Gasseparator so angesteuert wird, dass das Kathodenabgas direkt einen entsprechend angepassten Sauerstoffanteil hat. Wird der Sauerstoffanteil des Kathodenabgases auf einen Wert angehoben, der über dem Eingangswert der Zuluft liegt, wird mit Vorteil das Leistungsvermögen der Brennstoffzelle erhöht. Wird dagegen der Sauerstoffanteil auf einen Wert unterhalb des Eingangswerts der Zuluft gesenkt, kann die Menge des bereitgestellten Inertgases entsprechend erhöht werden. Zwar ist in diesem Fall durch den einhergehenden Druckverlust des sauerstoffangereicherten Gases ein erhöhter Leistungsbedarf zur Verdichtung des Kathodengases vorhanden, allerdings wird durch die Verdichtung des Kathodengases ebenfalls das Leistungsvermögen der Brennstoffzelle gesteigert.

In Weiterbildung der Erfindung ist vorgesehen, dass das Kathodengas in der Brennstoffzelle befeuchtet und dadurch in der Temperatur verändert wird. Durch die Befeuchtung des Kathodenabgases kann aufgrund einer daraus resultierenden Abkühlung des Kathodengases die abzuführende Wärmemenge gesenkt und entsprechend die erforderliche Kühlleistung reduziert werden. Bei einer gewünschten kompakteren Bauweise kann die Betriebstemperatur erhöht werden, sodass durch die höhere Temperaturdifferenz zum Kühlsystem kleinere Wärmeübertrager und Kühlsysteme verwendbar werden.

In Weiterbildung der Erfindung ist vorgesehen, dass die kinetische Energie des sauerstoffangereicherten Gases für dessen Verdichtung genutzt wird. Dadurch kann ein Verdichter des Brennstoffzellensystems entlastet oder gar ersetzt werden, sodass auch hier Platz und zum Betrieb des Verdichters genutzte Energie, eingespart werden.

In Weiterbildung der Erfindung ist vorgesehen, dass das Kathodenabgas in das stickstoffangereicherte Gas geführt wird. Da das sauerstoffangereicherte Gas, das in die Brennstoffzelle geführt wird, für die Brennstoffzelle als Sauerstofflieferant dient und der Sauerstoff in der Brennstoffzelle umgesetzt wird, verlässt das Kathodenabgas die Brennstoffzelle mit einem geringen Anteil an Sauerstoff, sodass auch das Kathodenabgas als Inertgas geeignet ist. Dies kann so vorteilhaft mit dem stickstoffangereicherten Gas des Gasseparators zusammengeführt werden und gemeinsam als Inertgas an den Bestimmungsort befördert werden. Alternativ dazu kann das Kathodengas für sich als Inertgas verwendet werden, ohne vorher mit dem stickstoffangereicherten Gas zusammengeführt zu werden. Dies ist besonders vorteilhaft, wenn das Kathodengas relativ zum stickstoffangereicherten Gas des Gasseparators sauerstoffabgereichert, also ein reineres Inertgas ist. Sollte das Kathodengas einen ähnlichen oder gar gleichen Sauerstoffgehalt wie das stickstoffangereicherte Gas aufweisen, ist eine Zusammenführung der Gase besonders vorteilhaft, da der Output des Inertgases so deutlich erhöht wird. Ebenso kann das Kathodengas als Inertgas verwendet werden, wenn der Sauerstoffgehalt höher ist als der des stickstoffangereicherten Gases. Allerdings ist in diesem Fall abzuwägen, ob die Verunreinigung des Inertgases durch den höheren Sauerstoffanteil des Kathodengases zu einem so hohen Sicherheitsrisiko führt, dass die erhöhte Menge des ausgegebenen Inertgases diesen Nachteil nicht wert ist. Ebenfalls ist es vorteilhaft, das Kathodenabgas als Inertgas zu verwenden, da so der Gasseparator in der Produktion des Inertgases entlastet wird und auch im Gasseparator ein geringerer Volumenstrom notwendig ist. Im Gegenzug wird nur ein Teil der Zuluft in die Brennstoffzelle geführt, sodass auch hier weniger Kathodenabgase entstehen, die durch einen Kondensator gekühlt werden müssen. So wird weiter die erforderliche Kühl- und Trocknungsleistung und Baugröße der Vorrichtung reduziert. Die Reduktion der erforderlichen Kühlleistung ist insbesondere aufgrund der daraus resultierenden Verbesserung der Kaltstartfähigkeit der Brennstoffzelle von großem Vorteil, da die reduzierte Kühlleistung schneller und mit einfacheren Mitteln erreicht werden kann. Dadurch ist das System deutlich flexibler in seiner Anwendung, wobei Vorlaufzeiten weiter reduziert werden können.

In Weiterbildung der Erfindung ist vorgesehen, dass ausschließlich das Kathodenabgas als Inertgas verwendet wird. Diese Variante des erfindungsgemäßen Verfahren ist insbesondere dann von Vorteil, wenn die zugeführte Zuluft ohnehin sauerstoffangereichert ist und durch einen möglicherweise vorgeschalteten Gasseparator nur geringe Mengen von stickstoffangereicherten Gasen produziert werden.

In Weiterbildung der Erfindung ist vorgesehen, dass das Kathodenabgas in einem Rezirkulationskreis in die Zuluft zurückgeführt wird und der Gasseparator das sauerstoffangereicherte Gas vor oder nach der Brennstoffzelle erzeugt. Dies ist insbesondere dann von Vorteil, wenn die thermische Energie des Kathodenabgases dafür verwendet wird, um eine Vielzahl von Brennstoffzellen zu erwärmen und auf Betriebstemperatur zu bringen. So ist das System viel schneller auf Betriebstemperatur, sodass auch hier insgesamt die Kaltstartfähigkeit des Systems deutlich verbessert wird. Da die Zuluft gemeinsam mit dem Kathodenabgas und dem sauerstoffangereicherten Gas des Gasseparators ohnehin in einem Kreislauf ist, kann der Gasseparator vor oder nach der Brennstoffzelle angeordnet sein. Dabei wird das Zuluft-Kathodenabgas-Gemisch durch den Gasseparator vom stickstoffangereicherten Gas getrennt, welches aus dem System abgeführt wird, wohingegen das sauerstoffangereicherte Gas erneut in die Brennstoffzelle geführt wird.

In Weiterbildung der Erfindung ist vorgesehen, dass der Kondensator am Kathodenausgang temperiert wird, sodass die Gastemperatur und die relative Feuchtigkeit im Rezirkulationskreis der Brennstoffzelle aktiv angepasst werden. Diese Weiterbildung der Erfindung ermöglicht die genauere Anpassung der Systemtemperatur an die erforderliche Betriebstemperatur, wodurch die Kaltstartfähigkeit weiter verbessert wird.

In Weiterbildung der Erfindung ist vorgesehen, dass durch Drei-Wege-Ventile an den Schnittstellen Zuluft-Kathodenabgas-Verdichter und Kathodenabgas-Zuluft-Inertgas zwischen dem Verfahren, bei dem das Kathodenabgas in das stickstoffangereicherte Gas geführt wird, und demjenigen Verfahren, bei dem das Kathodenabgas in einem Rezirkulationskreis in die Zuluft zurückgeführt wird und der Gasseparator das sauerstoffangereicherte Gas vor oder nach der Brennstoffzelle erzeugt, gewechselt werden kann. Dies ermöglicht eine zielgerichtete Anpassung des Systems an die aktuellen Anforderungen. So kann das System in den ersten Modus geschaltet werden, wenn eine große Menge an Inertgas oder dessen schnelle Zuführung an seinen Bestimmungsort benötigt werden. Der zweite Modus dagegen ruft eine Leistungssteigerung der Brennstoffzelle hervor, insbesondere in Betriebsphasen, in denen weniger Inertgas oder eine besonders hohe Leistung der Brennstoffzelle benötigt werden.

In Weiterbildung der Erfindung ist vorgesehen, dass ein erster Gasseparator vor der Brennstoffzelle und ein zweiter Gasseparator nach der Brennstoffzelle angeordnet sind, wobei das jeweilige erzeugte sauerstoffangereicherte Abgas beider Gasseparatoren zusammengeführt und gemeinsam in die Brennstoffzelle geführt wird, wobei auch die Inertgase beider Gasseparatoren zusammengeführt werden. Durch eine derartige Form des erfindungsgemäßen Verfahrens ist eine allgemeine Effizienzsteigerung ermöglicht, insbesondere hinsichtlich des Leistungsvermögens der Brennstoffzelle und der Abgabemenge und Sauerstoffabreicherung des Inertgases.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
Fig. 1: Erstes Ausführungsbeispiel des erfindungsgemäßen Verfahrens.
Fig. 2: Zweites Ausführungsbeispiel des erfindungsgemäßen Verfahrens.
Fig. 3: Drittes Ausführungsbeispiel des erfindungsgemäßen Verfahrens.
Fig. 4: Viertes Ausführungsbeispiel des erfindungsgemäßen Verfahrens.
Fig. 5: Fünftes Ausführungsbeispiel des erfindungsgemäßen Verfahrens.
Fig. 6: Sechstes Ausführungsbeispiel des erfindungsgemäßen Verfahrens.

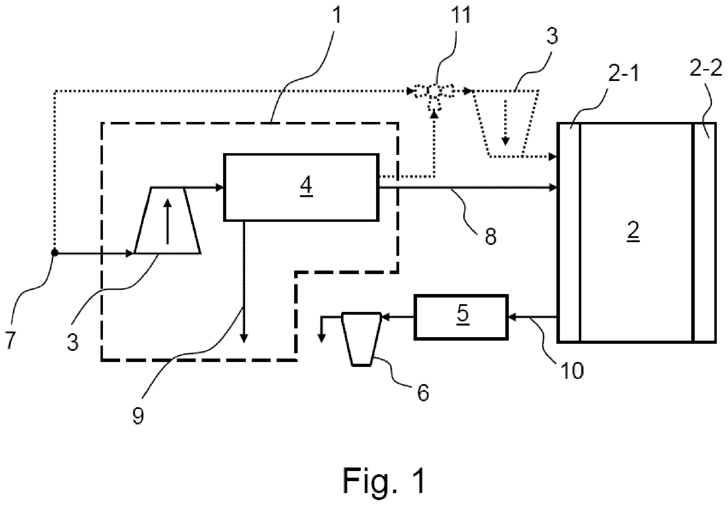

**Fig. 1** zeigt ein erstes Ausführungsbeispiel des erfindungsgemäßen Verfahrens. Das in dem erfindungsgemäßen Verfahren verwendete System weist im Wesentlichen ein Inertisierungssystem 1, gekennzeichnet durch den gestrichelten Kasten, und mindestens eine damit verbundene Brennstoffzelle 2 auf. Dabei wird Zuluft 7, beispielsweise in Form der Umgebungsluft, in das Inertisierungssystem 1 gespeist, wobei die Zuluft 7 zunächst durch einen Verdichter 3 verdichtet wird und in verdichteter Form einen Gasseparator 4 durchläuft. Durch das Verdichten der Zuluft 7 ist ein platzsparender Gasseparator 4 einsetzbar, welcher aufgrund des hohen Gasvolumenstroms der verdichteten Zuluft 7 besonders effizient wirkt. Der Gasseparator 4 kann dabei beispielsweise eine Membran sein, die den Unterschied der Diffusionsgeschwindigkeiten von Stickstoff, Sauerstoff und Wasser nutzt. So bleibt der Stickstoffanteil der Zuluft 7 aufgrund der geringen Diffusionsgeschwindigkeit innerhalb der Membran, während der Sauerstoffanteil durch die Membran tritt. Das durch den Gasseparator 4 produzierte stickstoffangereicherte Gas 9 strömt als Inertgas an seinen Bestimmungsort, beispielsweise zu den Treibstofftanks, während das von Inertisierungssystemen 1 bislang als Abfallprodukt behandelte sauerstoffangereicherte Gas 8 nun erfindungsgemäß zu einer Brennstoffzelle 2 mit Kathode 2-1 und Anode 2-2 gefördert wird. Das sauerstoffangereicherte Gas 8 wird dabei vorzugsweise an einen Kathodeneingang der Brennstoffzelle 2 geführt, sodass der enthaltene Sauerstoff in der Brennstoffzelle 2 umgesetzt werden kann. Sollte der Volumenstrom des sauerstoffangereicherten Gases 8 nicht ausreichen, um die gewünschte Leistung der Brennstoffzelle 2 zu ermöglichen, kann optional, in **Fig. 1** als gepunktete Linien und Symbole dargestellt, ein weiterer Verdichter 3 vor der Brennstoffzelle 2 wirken, dem entweder die Zuluft 7 direkt oder mindestens ein Teil des sauerstoffangereicherten Gases 8 zugeführt wird und der dieses zugeführte Gas verdichtet und zusätzlich in die Brennstoffzelle 2 speist. Um wahlweise zwischen sauerstoffangereichertem Gas 8 und Zuluft 7 als zu verdichtendem Gas umzuschalten, kann ein Drei-Wege-Ventil 11 verwendet werden, welches insbesondere variabel einstellbar ist, also auch ein Gemisch aus sauerstoffangereichertem Gas 8 aus dem Gasseparator 4 und Zuluft 7 dem Verdichter 3 zuführt. Das nach Umsetzen des Sauerstoffs in der Brennzelle 2 ausgestoßene Kathodenabgas 10 wird erfindungsgemäß durch einen Kondensator 5 gekühlt oder erwärmt und zumindest teilweise verflüssigt, um anschließend in einem Wasserabscheider 6 von dem darin enthaltenen Wasser getrennt zu werden. Das restliche Gas verlässt das System anschließend als Abgas.

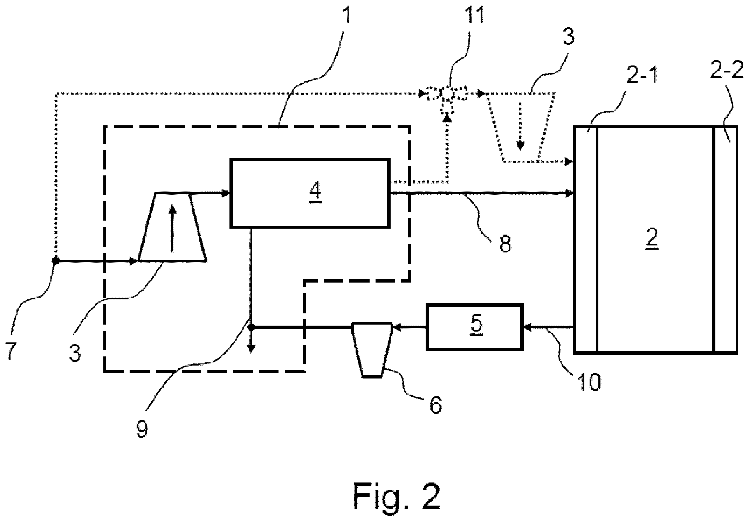

**Fig. 2** zeigt ein zweites Ausführungsbeispiel des erfindungsgemäßen Verfahrens. Im Unterschied zu dem in Figur 1 gezeigten Verfahren wird das durch den Kondensator 5 und den Wasserabscheider 6 gereinigte Kathodenabgas 10 in die Leitung des stickstoffangereicherten Gases 9 geführt und gemeinsam mit diesem als Inertgas verwendet. Da ein Großteil des Sauerstoffes des sauerstoffangereicherten Gases 8 in der Brennzelle 2 umgesetzt wird, weist das Kathodenabgas 10 nur einen geringen Sauerstoffanteil auf, sodass sich das Kathodenabgas 10 ebenfalls als Inertgas eignet.

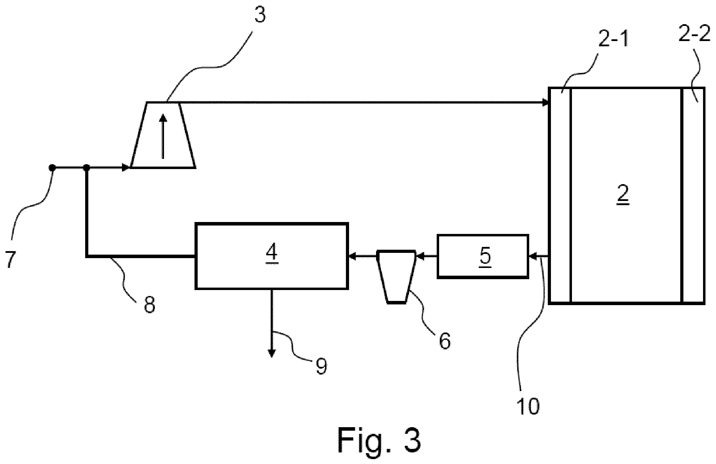

**Fig. 3** zeigt ein drittes Ausführungsbeispiel des erfindungsgemäßen Verfahrens. In diesem Ausführungsbeispiel ist der Gasseparator 4 nach dem Kondensator 5 und dem Wasserabscheider 6, insbesondere aber nach der Brennzelle 2 wirkend. So wird das von der Brennzelle 2 abgestoßene Kathodenabgas 10 nach der Reinigung durch Kondensator 5 und Wasserabscheider 6 durch den Gasseparator 4 in ein stickstoffangereichertes Gas 9 und ein sauerstoffangereichertes Gas 8 getrennt, wobei das stickstoffangereicherte Gas 9 aus dem System entfernt und in den Bestimmungsort wie einem Tankbehälter gefüllt wird und das sauerstoffangereicherte Gas 8 in die Leitung der Zuluft 7 geführt wird. Das Gemisch aus Zuluft 7 und dem zurückgeführten sauerstoffangereichertem Gas 8 wird durch einen Verdichter 3 verdichtet und anschließend in die Brennstoffzelle 2 geführt. Dabei wird der Großteil des Sauerstoffs im System gehalten, sodass die Brennstoffzelle 2 die größtmögliche Leistung abrufen kann.

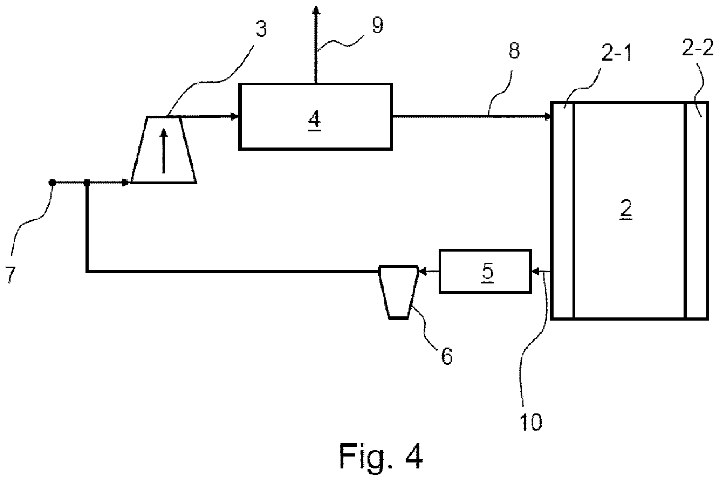

**Fig. 4** zeigt ein viertes Ausführungsbeispiel des erfindungsgemäßen Verfahrens. Unterscheidend zu der in **Fig. 3** gezeigten Ausführungsform ist der Gasseparator 4 vor der Brennstoffzelle 2 wirkend, sodass die eingangs eingeführte Zuluft 7 zunächst den Gasseparator 4 passiert. Dabei wird auch in dieser Ausführungsform das stickstoffangereicherte Gas 9 aus dem System geführt, während das sauerstoffangereicherte Gas 8 in die Brennzelle 2 geführt wird. Das aus der Brennzelle 2 abgeführte Kathodengas 10 wird nach der Reinigung durch Kondensator 5 und Wasserabscheider 6 zurück- und mit der Zuluft 7 zusammengeführt, sodass das daraus entstandene Gasgemisch durch den Verdichter 3 verdichtet und so in den Gasseparator 4 geführt wird.

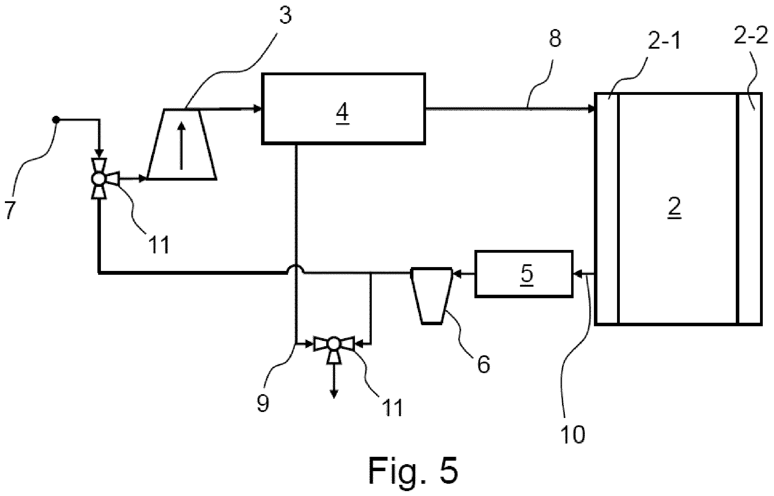

**Fig. 5** zeigt ein fünftes Ausführungsbeispiel des erfindungsgemäßen Verfahrens. Die dazu verwendete Vorrichtung stellt eine Kombination aus den in **Fig. 2** und **Fig. 4** gezeigten Vorrichtungen dar, wobei zwischen den in diesen Figuren beschriebenen Verfahren nach Belieben gewechselt werden kann. Dafür sind zwei Drei-Wege-Ventile 11 vorgesehen, wovon eines an der Schnittstelle zwischen Zuluft 7, Verdichter 3 und Rückführung des Kathodengases 10 und das zweite an der Schnittstelle zwischen stickstoffangereichertem Gas 9 und Kathodenabgas 10 angeordnet ist. Die Zuluft 7 wird durch das erste Drei-Wege-Ventil 11 in den Verdichter 3 geführt, in dem die Zuluft 7 verdichtet wird. Die verdichtete Zuluft 7 wird in den Gasseparator 4 geführt, bei dem sie in ein stickstoffangereichertes Gas 9, welches aus dem System abgeführt wird, und ein sauerstoffangereichertes Gas 8, welches in die mindestens eine Brennzelle 2 geführt wird, getrennt wird. Das stickstoffangereicherte Gas 9 wird dabei zu einem Drei-Wege-Ventil 11 geführt, welches bei Bedarf bei entsprechender Schaltung das aus der Brennzelle 2 abgeführte Kathodengas 10, welches zuvor durch den Kondensator 5 und Wasserabscheider 6 gereinigt und gegebenenfalls abgekühlt oder erhitzt wird, dem stickstoffangereicherten Gas 9 zuführen kann. So können, wie in dem in **Fig. 2** beschriebenen Verfahren, das stickstoffangereicherte Gas 9 und das gereinigte Kathodengas 10 zusammengeführt und gemeinsam als Inertgas verwendet werden. Ist dieses Drei-Wege-Ventil 11 für das Kathodenabgas 10 geschlossen, wird das Kathodenabgas 10 gezwungenermaßen zu dem ersten Drei-Wege-Ventil 11 geführt, wo es mit der Zuluft 7 zusammengeführt und in den Kreislauf zurückgeführt wird. Dabei ist es wesentlich, dass eines der Drei-Wege-Ventile 11 in dem beschriebenen Verfahren geöffnet sein muss, sodass das Kathodenabgas 10 entweder zurückgeführt oder als Inertgas aus dem System entfernt werden kann und ein Rückstau des Kathodenabgases 10 verhindert wird. Alternativ dazu kann ein weiteres Drei-Wege-Ventil 11 vorgesehen sein, welches eine Entfernung des Kathodenabgases 10 als einfaches Abgas, also ein wie in **Fig. 1** gezeigtes Verfahren ermöglicht.

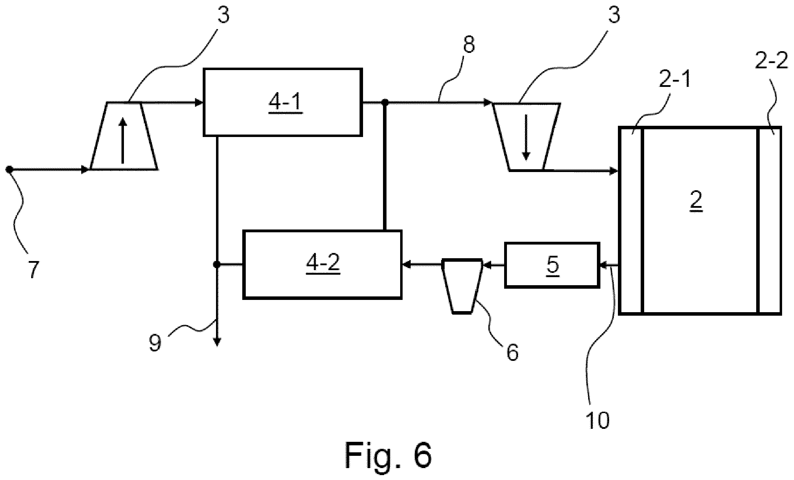

**Fig. 6** zeigt ein sechstes Ausführungsbeispiel des erfindungsgemäßen Verfahrens. Dieses sieht vor, dass zwei Gasseparatoren 4 verwendet werden. Dabei wird die Zuluft 7 wie zuvor durch einen Verdichter 3 verdichtet und anschließend in einen ersten Gasseparator 4-1 geführt. Das daraus entstehende stickstoffangereicherte Gas 9 wird als Inertgas aus dem System geführt, während das sauerstoffangereicherte Gas 8 in die Brennstoffzelle 2 geführt wird. Das aus der Brennstoffzelle 2 ausgeschiedene Kathodenabgas 10 wird durch den Kondensator 5 und Wasserabscheider 6 gereinigt und in einen zweiten Gasseparator 4-2 geführt, wo das Kathodenabgas erneut getrennt wird. Das stickstoffangereicherte Gas 9 wird mit dem des ersten Gasseparators 4-1 zusammengeführt und so aus dem System geführt, während das sauerstoffangereicherte Gas 8 mit dem des ersten Gasseparators 4-1 zusammengeführt und in die Brennstoffzelle 2 geführt wird. Dabei ist es aufgrund der großen Gesamtmenge des sauerstoffangereicherten Gases 8 aus den beiden Gasseparatoren 4 vorteilhaft, wenn ein weiterer Verdichter 3 nach der Zusammenführung der beiden sauerstoffangereicherten Gase 8 und vor der Brennstoffzelle 2 angeordnet ist und die sauerstoffangereicherten Gase 8 verdichtet, da so die Effizienz der Brennstoffzelle weiter erhöht wird.

### BEZUGSZEICHENLISTE

- 1: Inertisierungssystem
- 2: Brennstoffzelle
- 2-1: Kathode
- 2-2: Anode
- 3: Verdichter
- 4: Gasseparator
- 4-1: Erster Gasseparator
- 4-2: Zweiter Gasseparator
- 5: Kondensator
- 6: Wasserabscheider
- 7: Zuluft
- 8: Sauerstoffangereichertes Gas
- 9: Stickstoffangereichertes Gas
- 10: Kathodenabgas
- 11: Drei-Wege-Ventil

## Patentansprüche

1. Verfahren zur Steigerung der Kaltstartfähigkeit sowie des Lastaufschalt- und Leistungsvermögens von Flugzeugen bei gleichzeitiger Sauerstoffabreicherung des Systemabgases, bei dem eine Zuluft (7) in einem Verdichter (3) eines Inertisierungssystems (1) verdichtet und in einen Gasseparator (4) des Inertisierungssystems (1) geführt wird, aus dem ein sauerstoffangereichertes Gas (8) und ein stickstoffangereichertes Gas (9) abgeführt werden, wobei weiter aus einer Brennstoffzelle (2) ein Kathodenabgas (10) abgeführt und durch einen Kondensator (5) verflüssigt wird, wobei aus dem verflüssigten Kathodenabgas (10) Wasser durch einen Wasserabscheider (6) getrennt wird, wobei das sauerstoffangereicherte Gas (8) durch einen Kathodeneingang einer Brennstoffzelle (2) in die Brennstoffzelle (2) geführt wird, und wobei ein Sauerstoff- und Wasserdampfpartialdruck im sauerstoffangereicherten Gas (8) und die Menge des bereitgestellten Gases (9) iterativ an die jeweiligen, zum benötigten Leistungsvermögen der Brennstoffzelle (2) korrespondierenden Werte angepasst werden.

2. Verfahren nach Anspruch 1, bei dem das Kathodenabgas (10) in das stickstoffangereicherte Gas (9) geführt wird.

3. Verfahren nach Anspruch 1 oder 2, bei dem ausschließlich das Kathodenabgas (10) als Inertgas verwendet wird.

4. Verfahren nach Anspruch 1 oder 2, bei dem das Kathodenabgas (10) in einem Rezirkulationskreis in die Zuluft (7) zurückgeführt wird und der Gasseparator (4) das sauerstoffangereicherte Gas (8) vor oder nach der Brennstoffzelle (2) erzeugt.

5. Verfahren nach einem der vorangegangenen Ansprüche, bei dem der Kondensator (5) am Kathodenausgang temperiert werden kann, sodass die Gastemperatur und die relative Feuchtigkeit im Rezirkulationskreis der Brennstoffzelle (2) aktiv angepasst werden.

6. Verfahren nach einem der vorangegangenen Ansprüchen, bei dem durch Drei-Wege-Ventile (11) an den Schnittstellen Zuluft-Kathodenabgas-Verdichter und Kathodenabgas-Zuluft-Inertgas zwischen dem Verfahren nach Anspruch 2 und dem Verfahren nach Anspruch 4 gewechselt werden kann.

7. Verfahren nach Anspruch 1, bei dem ein erster Gasseparator (4-1) vor der Brennstoffzelle (2) und ein zweiter Gasseparator (4-2) nach der Brennstoffzelle (2) angeordnet sind, wobei das jeweilige sauerstoffangereicherte Abgas (8) beider Gasseparatoren (4-1, 4-2) zusammengeführt und gemeinsam in die Brennstoffzelle (2) geführt werden, wobei auch die stickstoffangereicherten Gase (9) beider Gasseparatoren (4-1, 4-2) zusammengeführt werden.

## Claims

1. A method for increasing the cold-starting capability and the load application and performance capacity of aircraft with simultaneous oxygen depletion of the system exhaust, an infeed air (7) being compressed in a compressor (3) of an inertization system (1) and being fed into a gas separator (4) of the inertization system (1), out of which an oxygen-enriched gas (8) and a nitrogen-enriched gas (9) are discharged, wherein a cathode off-gas (10) is further discharged from a fuel cell (2) and is condensed by a condenser (5), wherein water is separated out of the condensed cathode off-gas (10) by a water separator (6), wherein the oxygen-enriched gas (8) is fed through a cathode inlet of a fuel cell (2) into the fuel cell (2), and wherein a partial pressure of oxygen and water vapor in the oxygen-enriched gas (8) and the amount of the provided gas (9) are iteratively adjusted to the relevant values corresponding to the required power capacity of the fuel cell (2).

2. The method according to claim 1, wherein the cathode off-gas (10) is fed into the nitrogen-enriched gas (9).

3. The method according to claim 1 or 2, wherein exclusively the cathode off-gas (10) is used as inert gas.

4. The method according to claim 1 or 2, wherein the cathode off-gas (10) is fed back into the infeed air (7) in a recirculation circuit and the gas separator (4) generates the oxygen-enriched gas (8) upstream or downstream of the fuel cell (2).

5. The method according to any one of the preceding claims, wherein the condenser (5) can be temperature-controlled at the cathode outlet, so that the gas temperature and the relative humidity in the recirculation circuit of the fuel cell (2) are actively adapted.

6. The method according to any one of the preceding claims, wherein a change can be made between the method according to claim 2 and the method according to claim 4 by means of three-way valves (11) at the interfaces infeed air / cathode off-gas / compressor and cathode off-gas / infeed air / inert gas.

7. The method according to claim 1, wherein a first gas separator (4-1) is disposed upstream of the fuel cell (2) and a second gas separator (4-2) is disposed downstream of the fuel cell (2), the oxygen-enriched off-gas (8) of both gas separators (4-1,4-2) is combined and fed jointly into the fuel cell (2), wherein the nitrogen-enriched gases (9) of both gas separators (4-1,4-2) are also combined.

## Revendications

1. Procédé pour augmenter l'aptitude au démarrage à froid ainsi que la capacité d'application de charge et les performances d'avions, avec appauvrissement simultané en oxygène des effluents gazeux du système, dans lequel
de l'air d'alimentation (7) est comprimé dans un compresseur (3) d'un système d'inertage (1) et est acheminé dans un séparateur de gaz (4) du système d'inertage (1), duquel sont évacués un gaz enrichi en oxygène (8) et un gaz enrichi en azote (9),
des effluents gazeux de cathode (10) sont en outre évacués d'une pile à combustible (2) et liquéfiés par un condenseur (5),
de l'eau est séparée des effluents gazeux de cathode liquéfiés (10) par un séparateur d'eau (6),
le gaz enrichi en oxygène (8) est acheminé dans la pile à combustible (2) à travers une entrée de cathode d'une pile à combustible (2),
et
une pression partielle d'oxygène et de vapeur d'eau dans le gaz enrichi en oxygène (8) et la quantité de gaz fournie (9) sont adaptées de manière itérative aux valeurs respectives correspondant aux performances requises de la pile à combustible (2).

2. Procédé selon la revendication 1,
dans lequel les effluents gazeux de cathode (10) sont acheminés dans le gaz enrichi en azote (9).

3. Procédé selon la revendication 1 ou 2,
dans lequel seuls les effluents gazeux de cathode (10) sont utilisés comme gaz inerte.

4. Procédé selon la revendication 1 ou 2,
dans lequel les effluents gazeux de cathode (10) sont recyclés dans l'air d'alimentation (7) dans un circuit de recirculation, et le séparateur de gaz (4) produit le gaz enrichi en oxygène (8) en amont ou en aval de la pile à combustible (2).

5. Procédé selon l'une des revendications précédentes,
dans lequel le condenseur (5) en sortie de cathode peut être tempéré de manière à adapter activement la température du gaz et l'humidité relative dans le circuit de recirculation de la pile à combustible (2).

6. Procédé selon l'une des revendications précédentes,
dans lequel il est possible de passer du procédé selon la revendication 2 au procédé selon la revendication 4 au moyen de vannes à trois voies (11) aux interfaces air d'alimentation - effluents gazeux de cathode - compresseur et effluents gazeux de cathode - air d'alimentation - gaz inerte.

7. Procédé selon la revendication 1,
dans lequel un premier séparateur de gaz (4-1) est disposé en amont de la pile à combustible (2) et un deuxième séparateur de gaz (4-2) est disposé en aval de la pile à combustible (2), les gaz respectifs (8) enrichis en oxygène des deux séparateurs de gaz (4-1, 4-2) étant réunis et acheminés conjointement dans la pile à combustible (2), et les gaz (9) enrichis en azote des deux séparateurs de gaz (4-1, 4-2) étant également réunis.
